# EUROPEAN PATENT APPLICATION

(11) **EP 4 037 069 A1**
(43) Date of publication of application: **03.08.2022**
(21) Application number: 21861885.8
(22) Date of filing: 19.07.2021
(51) Int. Cl.: H01M 10/655, H01M 10/653, H01M 10/613, H01M 10/647, H01M 10/625

(54) **BATTERY MODULE AND BATTERY PACK INCLUDING SAME**

(30) Priority: 24.08.2020 KR 20200106089
(71) Applicant: LG Energy Solution, Ltd., Seoul 07335 (KR)
(72) Inventor: PARK, Jeonghoon, Daejeon 34122 (KR); CHOI, Yongjoon, Daejeon 34122 (KR); KIM, Boseon, Daejeon 34122 (KR); HAN, Seungwon, Daejeon 34122 (KR)
(74) Representative: Plasseraud IP
(86) International application number: PCT/KR2021/009279
(87) International publication number: WO 2022/045586

(57) **Abstract**

A battery module according to one embodiment of the present disclosure includes a battery cell stack formed by stacking a plurality of battery cells, a module frame for housing the battery cell stack, and a heat conductive pad located between the upper surface of the module frame and the battery cell stack, wherein the heat conductive pad has a recessed pattern corresponding to a first end part of the battery cells on a surface facing the battery cell stack.

## Description

### [TECHNICAL FIELD]

### Cross Citation with Related Application(s)

This application claims the benefit of Korean Patent Application No. 10-2020-0106089 filed on August 24, 2020 with the Korean Intellectual Property Office, the disclosure of which is incorporated herein by reference in its entirety.

The present disclosure relates to a battery module and a battery pack including the same, and more particularly, to a battery module with improved cooling performance, and a battery pack including the same.

### [BACKGROUND ART]

With the increase of the technological development and demand for a mobile device, demand for a secondary battery as an energy source is rapidly increasing. Accordingly, many researches of the battery capable of meeting a variety of needs are emerging.

A secondary battery has attracted considerable attention as an energy source for powerdriven devices, such as an electric bicycle, an electric vehicle, and a hybrid electric vehicle, as well as an energy source for mobile devices, such as a mobile phone, a digital camera, and a laptop computer.

Generally, the lithium secondary battery may be classified based on the shape of the exterior material into a can type secondary battery in which the electrode assembly is built in a metal can, and a pouch-type secondary battery in which the electrode assembly is built in in a pouch of an aluminum laminate sheet.

Small-sized mobile devices use one or three battery cells for each device, whereas middle or large-sized devices such as vehicles require high power and large capacity. Therefore, a middle or large-sized battery module having a plurality of battery cells electrically connected to one another is used. In such a battery module, a large number of battery cells are connected to each other in series or parallel to form a cell stack, thereby improving capacity and output. In addition, one or more battery modules can be mounted together with various control and protection systems such as a battery management system (BMS) and a cooling system to form a battery pack.

Since the battery cells constituting these middle or large-sized battery modules are composed of chargeable/dischargeable secondary batteries, such a high-output and large-capacity secondary battery generates a large amount of heat in a charging and discharging process. In particular, since the laminate sheet of the pouch-shaped battery widely used in the battery pack is surface-coated with a polymer material having low heat conductivity, it is difficult to effectively reduce the temperature of the entire battery cells.

When heat generated during the charging and discharging process is not effectively eliminated, heat accumulation may occur, which may accelerate deterioration of the battery cells, and according to circumstances, the battery module may catch fire or explode. Therefore, a cooling system for cooling the battery cells in a high-output, large-capacity battery module and/or battery pack may be important.

### [DETAILED DESCRIPTION OF THE INVENTION]

### [Technical Problem]

It is an object of the present disclosure to provide a battery module with improved cooling performance, and a battery pack including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack formed by stacking a plurality of battery cells, a module frame for housing the battery cell stack, and a heat conductive pad located between the upper surface of the module frame and the battery cell stack, wherein the heat conductive pad has a recessed pattern corresponding to a first end part of the battery cells on a surface facing the battery cell stack.

The first end part of the battery cells may have a double-sided folded shape.

The battery cell includes a cell case and an electrode assembly housed in the cell case, and the double-sided folded shape may be a shape of the double-folded sealing part formed by folding the sealing part of the cell case at least twice.

The battery further includes an electrode lead that protrudes from at least one of both end parts of the battery cells disposed along a direction perpendicular to the first end part of the battery cell, wherein the battery cell may have a rectangular structure formed long in the direction in which the electrode lead protrudes.

The recessed pattern of the heat conductive pad may include a plurality of recessed parts corresponding to the double-folded sealing part of each of the plurality of battery cells.

The first end part of the battery cell may have two mutually different inclined surfaces, the depressed part may be formed to correspond to one of the two inclined surfaces, and the double-fold sealing part may be in close contact with the recessed part.

The inclined surface of the double-fold sealing part and the inclined surface of the heat conductive pad on which the recessed part may be formed are in contact with each other.

The heat conductive pad has a first surface facing the upper surface of the module frame, and a second surface facing the battery cell stack, and the first surface and the second surface may have an asymmetric structure with each other.

The first surface of the heat conductive pad may have a surface parallel to the upper surface of the module frame.

The depressed pattern may have a sawtooth shape.

The battery module may further include a heat conductive resin layer located between the lower surface of the module frame and the battery cell stack.

The module frame includes a frame member including a bottom part and two side surface parts facing each other, and an upper plate covering an open upper part of the frame member, and
the heat conductive resin layer may be located between the bottom part of the frame member and the battery cell stack.

The bottom part and the side surface part included in the frame member may be integrally formed.

The battery may further include a heat conductive resin member located between the recessed pattern of the heat conductive pad and the first end part of the battery cell.

According to another embodiment of the present disclosure, there is provided a battery pack comprising the above-mentioned battery module.

### [ADVANTAGEOUS EFFECTS]

According to embodiments of the present disclosure, an additional heat transfer member is formed between the upper surface of the module frame and the battery cell stack, thereby capable of improving the heat conduction performance for discharging heat generated from the battery cells and improving the cooling performance of the battery module and the battery pack.

### [BRIEF DESCRIPTION OF THE DRAWINGS]

Fig. 1 is an exploded perspective view showing the battery module according to one embodiment of the present disclosure;
Fig. 2 is a perspective view showing a state in which the components of the battery module of Fig. 1 are coupled;
Fig. 3 is a perspective view showing one battery cell included in the battery cell stack of Fig. 1;
Fig. 4 is a cross-sectional view taken along the yz plane of Fig. 2;
Fig. 5 is an enlarged perspective view showing a section A in Fig. 4;
Fig. 6 is a diagram showing a heat conductive pad structure according to the present embodiment;
Fig. 7 is a diagram showing a battery module equipped with the heat conductive pad of Fig. 6;
Fig. 8 is a graph showing the temperature change over time in the case of a center battery cell;
Fig. 9 is a graph showing the temperature change over time in the case of an edge cell;
Figs. 10 and 11 are diagrams showing a battery module according to another embodiment of the present disclosure; and
Fig. 12 is a diagram showing a modified example of the method of filling the heat conductive resin of Fig. 10.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure can be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

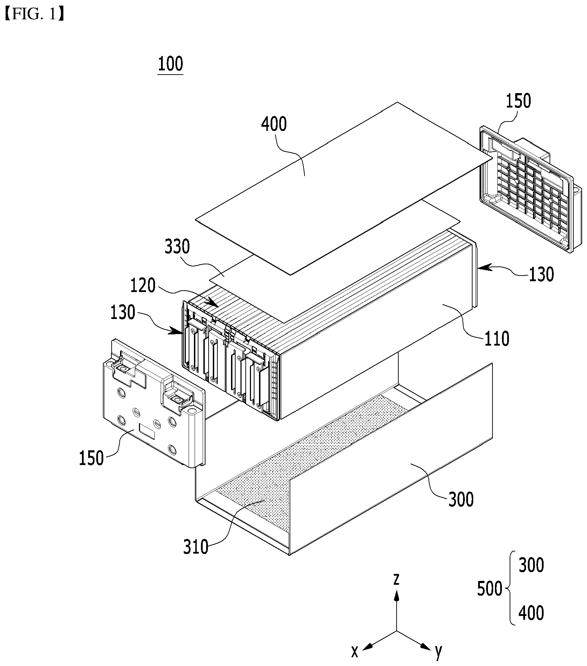

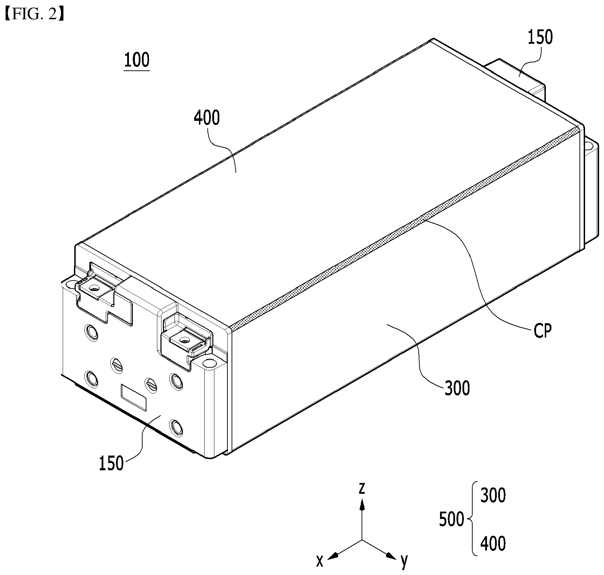

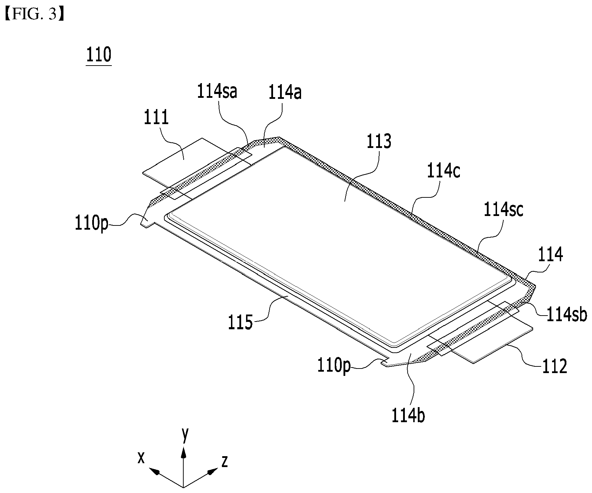

Fig. 1 is an exploded perspective view showing the battery module according to one embodiment of the present disclosure. Fig. 2 is a perspective view showing a state in which the components of the battery module of Fig. 1 are coupled. Fig. 3 is a perspective view showing one battery cell included in the battery cell stack of Fig. 1.

Referring to Figs. 1 and 2, a battery module 100 according to one embodiment of the present disclosure includes a battery cell stack 120 containing a plurality of battery cells 110, a module frame 500 for housing the battery cell stack 120, and end plates 150 for covering the front surface and the rear surface of the module frame 500. The module frame 500 may include a frame member 300 of which an upper surface, a front surface and a rear surface are opened, and an upper plate 400 that covers the upper part of the battery cell stack 120. The frame member 300 may be U-shaped. The battery module 100 further includes a bus bar frame 130 located between the battery cell stack 120 and the end plate 150. The end plate 150 may be formed of a metal material such as aluminum. The end plate 150 may include a front surface plate for covering one side of the module frame 500 and a back surface plate for covering the other side of the module frame 500.

When opened both sides of the frame member 300 are referred to as a first side and a second side, respectively, the frame member 300 has a plate-shaped structure that is bent so as to continuously warp the front, lower and rear surfaces adjacent to each other among the remaining outer surfaces excluding surfaces of the battery cell stack 120 corresponding to the first side and the second side. The upper surface corresponding to the lower surface of the frame member 300 is opened. Specifically, the frame member 300 may include a bottom part and two side surface parts facing each other. In this case, the bottom part and the two side surface parts may be integrally formed.

The upper plate 400 has a single plate-shaped structure that wraps the remaining upper surface excluding the front, lower and rear surfaces which are wrapped by the frame member 300. The frame member 300 and the upper plate 400 can be coupled by welding or the like in a state in which the corresponding corner areas are in contact with each other, thereby forming a structure wrapping the battery cell stack 120. That is, the frame member 300 and the upper plate 400 can have a coupling part CP formed at a corner area corresponding to each other by a coupling method such as welding, thereby forming a module frame 500.

The battery module 100 according to the present disclosure includes a heat conductive resin layer 310 located between the module frame 300 and the battery cell stack 120, and a heat conductive pad 330 located between the upper surface 400 and the battery cell stack 120. The heat conductive pad 330 may be formed of a silicon-based material similarly to the heat conductive resin layer 310, and can function as a compression pad.

The battery cell stack 120 includes a plurality of battery cells 110 stacked in one direction, and the plurality of battery cells 110 may be stacked in the Y-axis direction as shown in Fig. 1. The battery cell 110 is preferably a pouch-type battery cell. For example, referring to Fig. 3, the battery cell 110 according to the present embodiment may have a structure in which the two electrode leads 111 and 112 protrude from one end part 114a and the other end part 114b of the battery body 113 toward mutually opposite directions, respectively. The battery cell 110 can be manufactured by joining both end parts 114a and 114b of the cell case 114 and both side surfaces 114c connecting them in a state in which an electrode assembly (not shown) is housed in the cell case 114. In other words, the battery cell 110 according to the present embodiment has a total of three sealing parts 114sa, 114sb and 114sc, and the sealing parts 114sa, 114sb and 114sc have a structure that is sealed by a method such as heat fusion, and the remaining other side portion may be formed of a connection part 115. A space between both end parts 114a and 114b of the battery case 114 is defined as a longitudinal direction of the battery cell 110, and a space between the one side surface 114c and the connection part 115 that connect both end parts 114a and 114b of the battery case 114 is defined as a width direction of the battery cell 110.

The connection part 115 is a region extending long along one edge of the battery cell 110, and a protrusion part 110p of the battery cell 110 may be formed at an end part of the connection part 115. The protrusion part 110p may be formed on at least one of both end parts of the connection part 115 and may protrude in a direction perpendicular to the direction in which the connection part 115 extends. The protrusion part 110p may be located between one of the sealing parts 114sa and 114sb of both end parts 114a and 114b of the battery case 114, and the connection part 115.

The cell case 114 is generally formed of a laminate structure of a resin layer/metallic thin film layer/resin layer. For example, a surface of the battery case formed of an O(oriented)-nylon layer tends to slide easily by an external impact when a plurality of battery cells are stacked to form a medium or large-sized battery module. Therefore, in order to prevent this sliding and maintain a stable stacked structure of the battery cells, the battery cell stack 120 can be formed by attaching an adhesive member, for example, a sticky adhesive such as a double-sided tape or a chemical adhesive coupled by a chemical reaction upon adhesion, to the surface of the battery case. In the present embodiment, the battery cell stack 120 is stacked in a Y-axis direction and housed into the frame member 300 in a Z-axis direction, and then can be cooled by a heat conductive resin layer described later. As a comparative example thereto, there is a case in which the battery cells are formed as cartridge-shaped components so that fixing between the battery cells is made by assembling the battery module frame. In this comparative example, due to the presence of the cartridge-shaped components, the cooling action may be little or be proceeded in a surface direction of the battery cells, whereby the cooling does not work well toward a height of the battery module.

Widths of the side surface parts 300b of the U-shaped frame 300 and the upper plate 400 according to the present embodiment may be identical to each other. In other words, a corner portion along an X-axis direction of the upper plate 400 and a corner portion along an X-axis direction of the side surface parts 300b of the frame member 300 can be met with each other to be coupled by a method such as welding.

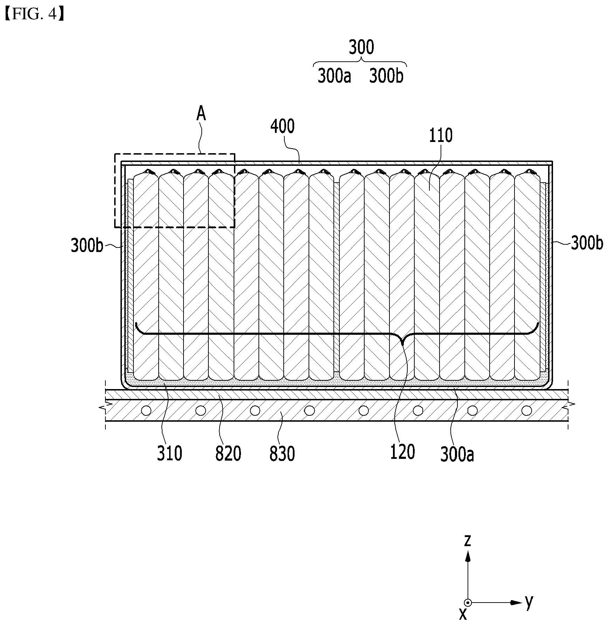

Fig. 4 is a cross-sectional view taken along the yz plane of Fig. 2.

Referring to Figs. 2 and 4, the battery module 100 according to the present embodiment may include a heat transfer mediation layer 820 located under the bottom part 300a of the module frame 500. The heat transfer mediation layer 820 may be formed of a heat transferable material that allows the heat transferred to the module frame 500 to be transferred to a heat sink 830 described later.

The battery module 100 according to the present embodiment may further include a heat sink 830 located in the lower part of the heat transfer mediation layer 820. The heat sink 830 includes a refrigerant flow path formed therein, and can perform a function of discharging heat generated in the battery cell stack 120 to the outside. However, only by using the heat transfer mediation layer 820 and/or the heat conductive resin layer 310 for the purpose of increasing heat efficiency with the heat sink 830, there is a limit in satisfying the cooling performance level required by the user.

It is necessary to lower the maximum temperature due to heat generation of the battery cells in the battery module, reduce the temperature deviation due to the battery cell position and thus improve the cooling performance. However, if a cooling device is added, there is a drawback in that the volume of the battery module increases. In order to improve such a problem, according to the present embodiment, a heat conductive pad 330 is formed in an air space between the upper plate 400 and the battery cell stack 120 where the heat sink 830 is not formed, thereby capable of improving the cooling performance while maintaining a compact module structure.

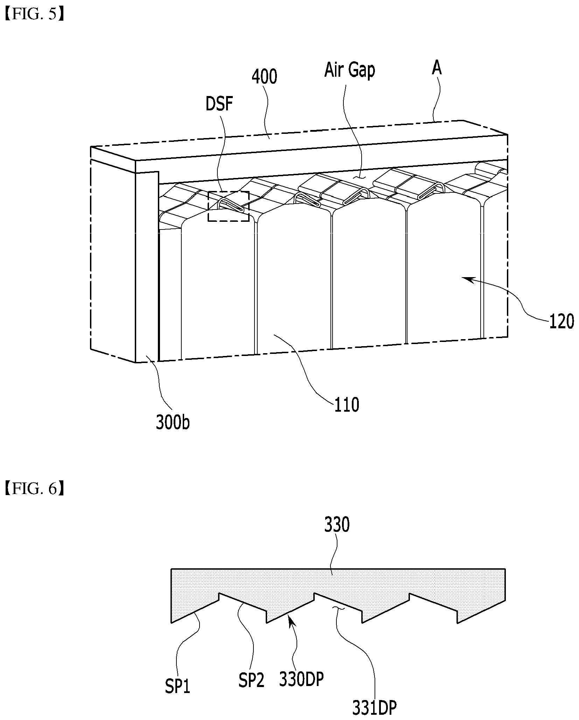

Fig. 5 is an enlarged perspective view showing a section A in Fig. 4.

According to the comparative example, as shown in Fig. 5, an air gap may exist between the upper plate 400 and the battery cell stack 120. The air gap can deteriorate the heat conduction characteristics, and in order for the heat of the upper end part of the battery cell 110, particularly the part of the battery cell 110 adjacent to the double-sided folded sealing part DSF, to be transferred to the heat sink 830 of Fig. 4 and cooled, it must pass through several layers, and therefore, the cooling efficiency may decrease.

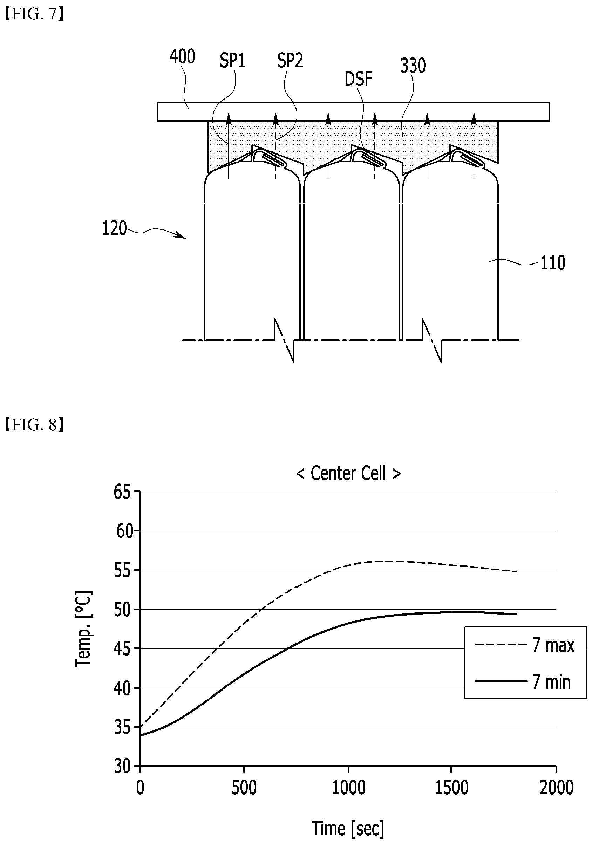

Fig. 6 is a diagram showing a heat conductive pad structure according to the present embodiment. Fig. 7 is a diagram showing a battery module equipped with the heat conductive pad of Fig. 6.

Referring to Figs. 6 and 7, the heat conductive pad 330 according to the present embodiment is located between the upper plate 400 corresponding to the upper surface of the module frame and the battery cell stack 120. The heat conductive pad 330 has a first surface facing the upper surface of the module frame and a second surface facing the battery cell stack, and the first surface and the second surface have an asymmetric structure with each other. The first surface may have a surface parallel to the upper plate 400 corresponding to the upper surface of the module frame.

The heat conductive pad 330 has a recessed pattern 330DP formed on a surface facing the battery cell stack 120. The recessed pattern 330DP may have a sawtooth shape. The recessed pattern 330DP has a structure corresponding to the first end part of the battery cell 110, and the first end part of the battery cell 110 may have a double-sided folded shape. The double-sided folded shape is a shape of the double-sided folded sealing part (DSF) formed by folding the sealing part of the cell case at least twice. Specifically, the first end part of the battery cell 110 may be a part 114sc to which both side surfaces 114c of the cell case 114 connecting both end parts 114a and 114b of the cell case 114 are adhered as shown in Fig. 3. In Fig. 3, the electrode leads 111 and 112 may be located at both end parts of the battery cell 110 located along a direction perpendicular to the first end part of the battery cell 110, and the battery cell 110 may have a rectangular structure in which the electrode leads 111 and 112 are formed long in a protruding direction.

Referring back to Figs. 6 and 7, the recessed pattern 330DP of the heat conductive pad 330 according to the present embodiment includes a plurality of recessed parts 331DP corresponding to the double-sided folded sealing part DSF of each of the plurality of battery cells 110 .

The first end part of the battery cell 110 has two mutually different inclined surfaces, and the heat conductive pad 330 also has a first inclined surface SP1 and a second inclined surface SP2 to correspond thereto. The first inclined surface SP1 of the heat conductive pad 330 may be in contact with the first end part of the battery cell 110, and the second inclined surface SP2 of the heat conductive pad 330 may be in contact with the inclined surface of the double-sided folded sealing part DSF. In order to form such a structure, the double-sided fold sealing part DSF may be in close contact with the recessed part 331DP of the heat conductive pad 330. By realizing such a structure, the contact area between the battery cell stack 120 and the heat conductive pad 330 can be maximized and the cooling performance can be improved.

Due to the double-sided folded sealing part DSF structure, an air gap may be formed between the battery cell 110 and the double-sided folded sealing part DSF. Consequently, a part, in which the second inclined surface SP2 of the heat conductive pad 330 and the inclined surface of the double-sided folded sealing part DSF are in contact with each other, can have weak adhesive force, compared to the part in which the first inclined surface SP1 of the heat conductive pad 330 is in contact with the first end of the battery cell 110. Therefore, as shown in Fig. 7, the heat moving in the arrow direction passing through the second inclined surface SP2 may be relatively small compared to the heat moving in the arrow direction passing through the first inclined surface SP1. Specifically, since the double-sided folded sealing part (DSF) folds twice to finish the sealing part, the heat efficiency of the die sealing gap existing therebetween may be supplemented through the heat conductive pad 330.

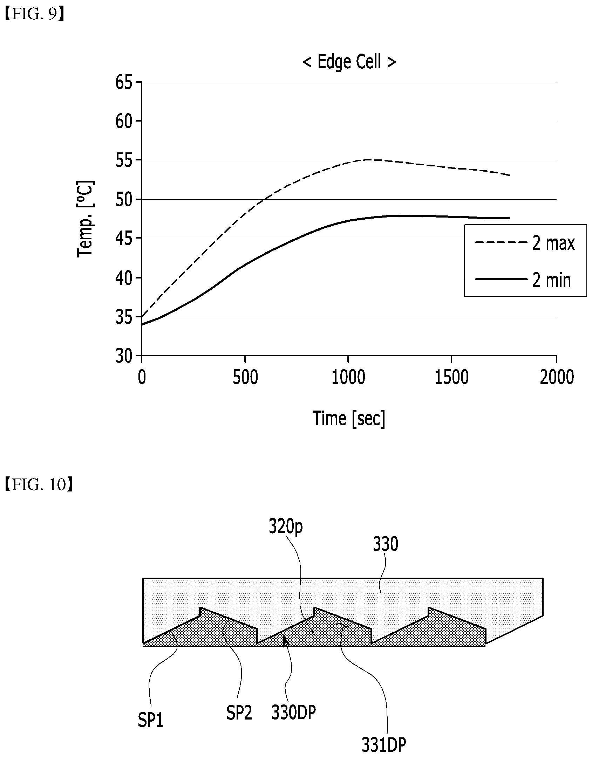

Fig. 8 is a graph showing the temperature change over time in the case of a center battery cell. Fig. 9 is a graph showing the temperature change over time in the case of an edge cell.

Table 1 below summarizes the results shown in Fig. 8 and 9 as maximum values, minimum values, and temperature gap values.

**[Table 1]**

| | Center Cell | | Edge Cell | | Temperature Gap |
|---|---|---|---|---|---|
| | maximum value | minimum value | maximum value | minimum value | |
| Comparative Example | 58.6 | 50.3 | 56.2 | 48.4 | 10.2 |
| Example | 56.1 | 48.9 | 55.0 | 47.6 | 8.5 |

Referring to Fig. 8, as shown in Fig. 5, in the comparative example, an air gap exists between the upper plate 400 and the battery cell stack 120. At this time, when the battery cell is charged and discharged (under the condition that charging is higher than 1C rate, discharging is lower than 1C rate), the temperature is rapidly increased at the initial stage due to the generated heat, and after about 1000 seconds or more, it appears as converging to a constant temperature. Referring to Fig. 9, in the embodiment of the present disclosure, a heat conductive pad 330 exists between the upper plate 400 and the battery cell stack 120 as shown in this figure. At this time, when the battery cell is charged and discharged, the temperature is rapidly increased at the initial stage due to the generated heat, and after about 1100 seconds or more, it appears as converging to a constant temperature or the temperature drops slightly.

Referring to Table 1 above, in the comparative example, the gap between the maximum temperature of the center battery cell and the minimum temperature of the edge battery cell is 10.2 degrees Celsius, and in the present embodiment, the gap between the maximum temperature of the center battery cell and the minimum temperature of the edge battery cell is 8.5 degrees Celsius. In conclusion, it can be confirmed that the temperature gap in the present embodiment is reduced by approximately 16% compared to the comparative example.

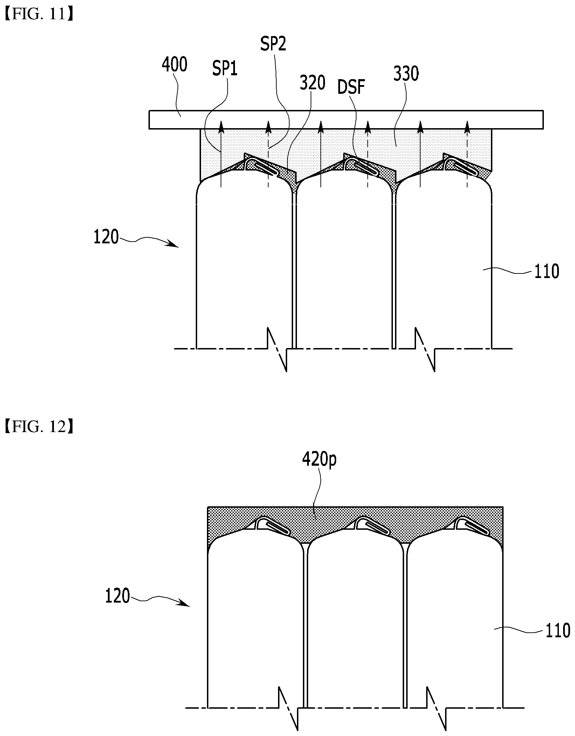

Figs. 10 and 11 are diagrams showing a battery module according to another embodiment of the present disclosure.

The battery module according to the present embodiment further include a heat conductive resin member 320 located between the heat conductive pad 330 and one end part of the battery cell 110 in which the double-sided folded sealing part DSF is formed as shown in Fig. 11. As shown in Fig. 10, the heat conductive resin member 320 can be formed by filling the heat conductive resin 320p in the recessed pattern 330DP of the heat conductive pad 330, and then pressing the heat conductive pad 330 and the battery cell stack 120. At this time, it is preferable to press the heat conductive pad 330 and the battery cell stack 120 before the heat conductive resin 320p is cured. In order to fill the heat conductive resin 320p in the recessed pattern 330DP of the heat conductive pad 330, the heat conductive resin 320p can be filled in the direction of gravity in a state in which the heat conductive pad 330 is turned inside out, unlike that shown in Fig. 10.

Fig. 12 is a diagram showing a modified example of the method of filling the heat conductive resin of Fig. 10.

Referring to Fig. 12, a heat conductive resin 420p may be coated onto end part of the battery cell stack 120, unlike that described in Fig. 10. Thereafter, the heat conductive pad 330 can be pressed on the battery cell stack 120 coated with the heat conductive resin 420p to form the heat conductive resin member 320, as shown in Fig. 11. According to the embodiments described in Figs. 10 to 12, the air gap is further minimized by the heat conductive resin member 320, and therefore, it can be more advantageous in terms of heat efficiency than the case of supplementing the heat efficiency only by the heat conductive pad 330.

On the other hand, one or more of the battery modules according to the present embodiments can be packaged in a pack case to form a battery pack.

The above-mentioned battery module and battery pack including the same can be applied to various devices. Such a device can be applied to a vehicle means such as an electric bicycle, an electric vehicle, or a hybrid vehicle, but the present disclosure is not limited thereto, and is applicable to various devices capable of using a battery module, which also falls under the scope of the present disclosure.

Although the invention has been shown and described above with reference to the preferred embodiments, the scope of the present disclosure is not limited thereto, and numerous other modifications and embodiments can be devised by those skilled in the art, which will fall within the spirit and scope of the principles of the invention described in the appended claims.

### [Description of Reference Numerals]

| | | | |
|---|---|---|---|
| 100: | battery module | 120: | battery cell stack |
| 310: | heat conductive resin layer | 320: | heat conductive resin member |
| 330: | heat conductive pad | 330DP: | recessed pattern |
| 331DP: | recessed part | 400: | upper plate |
| 500: | module frame | 830: | heat sink |
| DSF: | double-sided folded sealing part | | |

## Claims

1. A battery module comprising:
a battery cell stack formed by stacking a plurality of battery cells,
a module frame for housing the battery cell stack, and
a heat conductive pad located between the upper surface of the module frame and the battery cell stack,
wherein the heat conductive pad has a recessed pattern corresponding to a first end part of the battery cells on a surface facing the battery cell stack.

2. The battery module of claim 1, wherein:
the first end part of the battery cells has a double-sided folded shape.

3. The battery module of claim 2, wherein:
the battery cell comprises a cell case and an electrode assembly housed in the cell case, and
the double-sided folded shape is a shape of the double-folded sealing part formed by folding the sealing part of the cell case at least twice.

4. The battery module of claim 3,
which further comprises an electrode lead that protrudes from at least one of both end parts of the battery cells disposed along a direction perpendicular to the first end part of the battery cell,
wherein the battery cell has a rectangular structure formed long in the direction in which the electrode lead protrudes.

5. The battery module of claim 3, wherein:
the recessed pattern of the heat conductive pad comprises a plurality of recessed parts corresponding to the double-folded sealing part of each of the plurality of battery cells.

6. The battery module of claim 5, wherein:
the first end part of the battery cell has two mutually different inclined surfaces, the depressed part is formed to correspond to one of the two inclined surfaces, and the double-fold sealing part is in close contact with the recessed part.

7. The battery module of claim 6, wherein:
the inclined surface of the double-fold sealing part and the inclined surface of the heat conductive pad on which the recessed part is formed are in contact with each other.

8. The battery module of claim 1, wherein:
the heat conductive pad has a first surface facing the upper surface of the module frame, and a second surface facing the battery cell stack, and the first surface and the second surface have an asymmetric structure with each other.

9. The battery module of claim 8, wherein:
the first surface of the heat conductive pad has a surface parallel to the upper surface of the module frame.

10. The battery module of claim 1, wherein:
the depressed pattern has a sawtooth shape.

11. The battery module of claim 1,
which further comprises a heat conductive resin layer located between the lower surface of the module frame and the battery cell stack.

12. The battery module of claim 11, wherein:
the module frame comprises a frame member including a bottom part and two side surface parts facing each other, and an upper plate covering an open upper part of the frame member, and
the heat conductive resin layer is located between the bottom part of the frame member and the battery cell stack.

13. The battery module of claim 12, wherein:
the bottom part and the side surface part included in the frame member are integrally formed.

14. The battery module of claim 1,
which further comprises a heat conductive resin member located between the recessed pattern of the heat conductive pad and the first end part of the battery cell.

15. A battery pack comprising the battery module of claim 1.
